# EUROPÄISCHE PATENTSCHRIFT

(11) **EP 3 440 020 B1**
(45) Veröffentlichungstag und Bekanntmachung des Hinweises auf die Patenterteilung: **18.06.2025**
(21) Anmeldenummer: 17716829.1
(22) Anmeldetag: 06.04.2017
(51) Int. Cl.: C02F 1/72, C02F 1/66, C02F 101/18, C02F 103/10, C02F 103/16, C02F 103/34, C02F 103/36, C02F 103/40

(54) **VERFAHREN UND ANLAGE ZUM BEHANDELN VON CYANIDHALTIGEN FLÜSSIGKEITEN**
METHOD AND SYSTEM FOR THE TREATMENT OF CYANIDE-CONTAINING FLUIDS
PROCÉDÉ ET INSTALLATION POUR LE TRAITEMENT DE LIQUIDES CONTENANT DU CYANURE

(30) Priorität: 08.04.2016 DE 102016004061
(43) Veröffentlichungstag der Anmeldung: 13.02.2019
(73) Patentinhaber: Eisenmann Environmental Technology GmbH, 71088 Holzgerlingen (DE)
(72) Erfinder: SCHUMACHER, Jochen, 72072 Tübingen (DE)
(74) Vertreter: Ostertag & Partner Patentanwälte mbB
(86) Internationale Anmeldenummer: PCT/EP2017/058201
(87) Internationale Veröffentlichungsnummer: WO 2017/174702

(56) Entgegenhaltungen:
- EP-A1- 0 355 417
- US-A- 3 900 555
- US-A- 4 416 786
- US-A- 5 093 007
- US-A- 5 178 775
- US-A- 5 676 846

## Beschreibung

Die Erfindung betrifft ein Verfahren zum Behandeln von cyanidhaltigen Flüssigkeiten, insbesondere von cyanidhaltigem Abwasser, bei welchem
a) cyanidhaltige Flüssigkeit in einer Vorbehandlungszone einer Vorbehandlung unterzogen wird, bei welcher zumindest ein vorgegebener pH-Wert zwischen 3 und 12 und eine vorgegebene Temperatur eingestellt werden, wobei bei der Vorbehandlung eine Basisflüssigkeit gebildet wird;
b) Basisflüssigkeit mit einer Temperatur zwischen 40°C und 60°C in wenigstens einen Reaktionsreaktor gelangt und in diesem Reaktionsreaktor zumindest mit einem Oxidationsmittel in Form von Wasserstoffperoxid versetzt wird, wodurch eine Oxidationsreaktion der Cyanide initiiert wird;
c) Flüssigkeit aus dem Reaktionsreaktor als Intermediatflüssigkeit in wenigstens einen Prozessreaktor überführt wird, in welchem Bedingungen herrschen, bei denen die im Reaktionsreaktor initiierte Oxidationsreaktion der Cyanide ablaufen kann, wobei sich eine Prozessflüssigkeit bildet;
d) zumindest zeitweise ein kontinuierlicher Flüssigkeitsstrom aufrechterhalten wird, bei dem
   da) Basisflüssigkeit kontinuierlich aus der Vorbehandlungszone in den Reaktionsreaktor überführt wird;
   db) Intermediatflüssigkeit kontinuierlich von dem Reaktionsreaktor in den Prozessreaktor überführt wird; und
   dc) Prozessflüssigkeit kontinuierlich aus dem Prozessreaktor entnommen wird.

Außerdem betrifft die Erfindung eine Anlage zum Behandeln von cyanidhaltigen Flüssigkeiten, insbesondere von cyanidhaltigem Abwasser, mit
a) einer Vorbehandlungszone, in welcher cyanidhaltige Flüssigkeit einer Vorbehandlung unterziehbar ist, die einen Vorbehandlungsreaktor umfasst, bei welcher zumindest
   eine pH-Dosiereinrichtung vorhanden ist, mittels welcher ein pH-Einstellmittel (32) zudosierbar ist, sodass ein vorgegebener pH-Wert zwischen 3 und 12 eingestellt werden kann, und eine vorgegebene Temperatur eingestellt werden kann,
   wobei bei der Vorbehandlung eine Basisflüssigkeit gebildet wird;
b) wenigstens einem Reaktionsreaktor, in welchen Basisflüssigkeit mit einer Temperatur zwischen 40°C und 60°C gelangt und in welchem die Basisflüssigkeit zumindest mittels einer vorhandenen Oxidationsmittel-Dosiereinrichtung mit einem Oxidationsmittel in Form von Wasserstoffperoxid versetzbar ist, wodurch eine Oxidationsreaktion der Cyanide initiiert wird;
   wobei
c) Flüssigkeit aus dem Reaktionsreaktor als Intermediatflüssigkeit über eine Verbindungsleitung in wenigstens einen Prozessreaktor überführbar ist, in welchem Bedingungen herrschen, bei denen die im Reaktionsreaktor initiierte Oxidationsreaktion der Cyanide ablaufen kann, wobei sich eine Prozessflüssigkeit bildet;
d) mittels eines Pumpensystems zumindest zeitweise ein kontinuierlicher Flüssigkeitsstrom aufrechterhaltbar ist, bei dem
   da) Basisflüssigkeit kontinuierlich aus dem Vorbehandlungsreaktor der Vorbehandlungszone über eine Überführungsleitung in den Reaktionsreaktor überführt wird;
   db) Intermediatflüssigkeit kontinuierlich von dem Reaktionsreaktor über die Verbindungsleitung in den Prozessreaktor überführt wird; und
   dc) Prozessflüssigkeit kontinuierlich aus dem Prozessreaktor entnommen wird.

Solche Verfahren und Anlagen sind beispielsweise in der US 5,676,846 A, der US 4,416,786 A, der US 5,178,775 A, der US 5,093,007 A oder der US 3,900,555 A beschrieben.

In vielen Bereichen der Industrie fallen Abwässer an, die mit hohen Salzkonzentrationen und auch toxischen oder persistenten Stoffen und Verbindungen belastet sind und nicht durch biologische Reinigungs- und Klärverfahren von den unerwünschten Bestandteilen befreit werden können. Derartige Abwässer werden in chemisch-physikalischen Prozessen aufbereitet.

Vorliegend werden Abwässer behandelt, welche mit Cyaniden belastet sind. Unter dem Begriff Cyanid sind alle Salze und Verbindungen von Cyanwasserstoff HCN (Blausäure) zu verstehen. Beispielsweise fallen hierunter Cyanwasserstoff, Alkali- und Erdalkalicyanide, zahlreichen Metallkomplexverbindungen, wie Zn(CN)₂ und Kaliumhexacyanidoferrat(III) und dergleichen, sowie andere Verbindungen wie Thiocyanate und Cyanhydrine. Abhängig von der Stabilität der Cyanidverbindungen werden diese üblicherweise in freies Cyanid, leicht freisetzbares Cyanid und stabile Metallcyanidkomplexe unterteilt.

Cyanide, die nach Ansäuern auf einen pH-Wert von kleiner als 4 leicht in Cyanwasserstoff HCN umgewandelt werden, sind als freies Cyanid zu verstehen. Dies sind Cyanwasserstoff, Alkali- und Erdalkalicyanide. Das Cyanidion reagiert als Ligand in Verbindung mit verschiedenen Metallen zu Metallcyanidkomplexen. Die Stabilität der Komplexe ist abhängig von der Oxidationszahl des Metallions, woraus sich die oben genannte Unterteilung ergibt. Die Gruppe der leicht freisetzbaren Cyanide enthält neben den freien Cyaniden Komplexe mit Silber Ag, Cadmium Cd, Kupfer Cu, Quecksilber Hg, Nickel Ni und Zink Zn. Im englischsprachigen Raum werden Metallcyanidkomplexe mit gering bis mäßiger Stabilität als "weak acid dissociable" (WAD) bezeichnet. Weitaus stabiler sind Eisenkomplexe, insbesondere Eisen(II)-Komplexe, bei denen es sich nicht um Anlagerungskomplexe, sondern um Durchdringungskomplexe handelt. Sie sind selbst in konzentrierter Schwefelsäure beständig. Stabile Metallcyanidkomplexe werden im Englischen als strong acid dissociable (SAD) bezeichnet. Gemäß DIN 38405-13 werden Komplexe mit Kobalt nur teilweise bei der Bestimmung von leicht freisetzbaren Cyanid erfasst, weshalb sie hier den stabilen Metallcyanidkomplexen zugeordnet werden sollen.

Vorliegend sollen auch einfache Nitrile R-CN, wie Acetonitril oder Benzonitril, sowie Cyanationen (OCN⁻), Thiocyanat-Ionen (SCN⁻) und Chlorcyan (CICN) und Derivate hiervon unter den Begriff Cyanid fallen, obwohl solche Verbindungen gemäß DIN 38405-13 nicht unter den Begriff Cyanid fallen.

Das Verhältnis zwischen freien Cyaniden und Metallcyanidkomplexen in Wasser hängt von dem pH-Wert und den Konzentrationen der Schwermetalle ab, die in der Lage sind Metallcyanidkomplexe auszubilden. Im alkalischen Bereich liegt freies Cyanid vollständig dissoziiert vor und bildet stabile Metallkomplexe. Im neutralen und sauren Milieu ist das freie Cyanid schwach dissoziiert bzw. es bildet sich bevorzugt Cyanwasserstoff. Schwach komplexierte Metallcyanide zersetzen sich bei pH-Werten kleiner als 4, was zur verstärkten Entstehung von Cyanwasserstoff beiträgt.

Ab einer bestimmten Konzentration verursachen alle Verbindungen des Cyanids öko- und humantoxische Schädigungen. Dabei wird Cyanwasserstoff bzw. dem Cyanidion mit Abstand die größte toxische Wirkung zugeschrieben. Das Cyanidion wirkt dabei als unspezifischer Enzyminhibitor und erhält seine hohe Toxizität durch die Hemmung des Enzyms Cytochrom-c-Oxidase, wodurch die Zellatmung aussetzt und der Zelltod eintritt. Bei niedrigen Dosen treten unter anderem Reizerscheinungen an Schleimhäuten, Kopfschmerzen, Schwindel, Atemnot, Herzklopfen und Erbrechen auf. Hohe Dosen führen zu Erstickungskrämpfen, Atem- und Kreislaufstillstand. Des Weiteren sind Spätschäden des zentralen Nervensystems bekannt. Aufgrund der geringen Siedetemperatur von 25 °C wird HCN häufig über die Atemwege aufgenommen. Bereits eine Dosis von 200 - 300 ppm führt zum Tod. Die letale Dosis bei oraler Aufnahme liegt bei 1 mg CN⁻/kg Körpergewicht. Der MAK-Wert beträgt 1,9 ppm.

Es ist bekannt, dass Cyanide Auswirkung auf biologische Prozesse in der Abwasseraufbereitung haben. So können Cyanide zwar von einigen Mikroorganismen abgebaut werden, wirken sich jedoch bei erhöhten Konzentration negativ auf biologische Prozesse aus. Die Anwesenheit von Cyaniden ruft durch die Hemmung der Zellatmung häufig eine Inaktivierung der Mikroorganismen hervor. Außerdem kann die durch den Cyanidabbau hervorgerufene Schwermetallfreisetzung eine zusätzliche Hemmung der biologischen Prozesse zur Folge haben. Mit Blick auf freie Cyanide sollten für die Nitrifikation Konzentrationen größer 0,2 mg/l und für die Denitrifikation größer 5 mg/l vermieden werden, um einen stabilen Anlagenbetrieb zu gewährleisten. Metallkomplexcyanide hingegen führen aufgrund ihrer geringeren Toxizität erst bei höheren Konzentrationen zur teilweisen Inaktivierung der biologischen Prozesse.

Der Großteil an Cyaniden in Oberflächengewässern ist auf industrielle Quellen zurückzuführen; Cyanidverbindungen kommen zahlreich in diversen Industriezweigen zum Einsatz und gelangen durch Abwässer in die Oberflächengewässer. Diese cyanidhaltigen Abwässer stammen hauptsächlich aus den industriellen Gebieten der Metallreinigung und Metallbeschichtung, der Galvanik, der Metallverarbeitung, der Produktion von Automobilteilen, der Stahlverarbeitung, dort insbesondere beim Anlassen des Stahls, dem Bergbau, der Fotografie, der Pharmaindustrie, der Kokerei, der Erzlaugung sowie der Pestizid- und Kunststoffherstellung. Bei den meisten industriellen Anwendungen kommen Cyanide aufgrund der Neigung zur Metallkomplexbildung zum Einsatz. Cyanidhaltige Lösungen finden beispielsweise Anwendung in der Metallrückgewinnung und der Bergbauindustrie, um Metalle wie Gold Au und Silber Ag aus dem Erz zu extrahieren. Innerhalb galvanischer Prozesse werden cyanidhaltige Lösungen eingesetzt, um Metallionen wie Zink Zn und Cadmium Cd im neutralen bis alkalischen Milieu in Lösung zu halten. In der chemischen Industrie werden Cyanide für die Produktion anderer Chemikalien wie Acrylnitril, Adiponitril und Methylmethacrylat genutzt. In der Stahlindustrie entstehen cyanidbelastete Abwässer bei der Gichtgasaufbereitung mit Gaswäschern und bei Destillationsverfahren in der Kokerei. Cracken und verzögerte Koksbildung in der Mineralölindustrie verursachen ebenfalls cyanidhaltige Abfälle und Abwässer.

Es ist Aufgabe der Erfindung, ein Verfahren und eine Anlage der eingangs genannten Art zu schaffen, durch welche eine effektive sowie ressourcen- und energiesparende Behandlung von cyanidhaltigen Abwässern möglich sind.

Diese Aufgabe wird bei einem Verfahren der eingangs genannten Art dadurch gelöst, dass
e) Basisflüssigkeit und/oder Intermediatflüssigkeit und/oder Prozessflüssigkeit mittels einer Analyse-Kreiseinrichtung in die Vorbehandlungszone zurückgeführt wird, wobei mittels der Analyse-Kreiseinrichtung die Cyanid-Konzentration in der jeweiligen Flüssigkeit ermittelt wird;
   und
f) Prozessflüssigkeit in die Vorbehandlungszone zurückgeführt wird;
   und/oder
g) Prozessflüssigkeit bei der Entnahme zumindest teilweise in einen Speicherbehälter (84) überführt wird und Flüssigkeit aus dem Speicherbehälter in die Vorbehandlungszone zurückgeführt wird.

Erfindungsgemäß erfolgt die Cyanidentgiftung somit in einem Durchlaufverfahren in einer wenigstens zweistufigen Reaktorkaskade und nicht in einem Batch-Verfahren. Dies schließt nicht aus, dass zum Beispiel im Falle von Störungen oder hohen Cyanid-Konzentrationen, die zunächst abgebaut werden müssen, vorübergehen in einem Batchbetrieb gearbeitet wird. Die dem Prozessreaktor entnommene Prozessflüssigkeit weist eine Rest-Cyanid-Konzentration auf, die kleiner ist als die Cyanid-Konzentration der Basisflüssigkeit und kleiner ist als die Cyanid-Konzentration der Intermediatflüssigkeit. Die Cyanid-Konzentration der Prozessflüssigkeit sollte dementsprechend einen vorgegebenen Schwellenwert oder Grenzwert nicht überschreiten, der eine zulässige Cyanid-Konzentration definiert, bei der von einer cyanidentgifteten Flüssigkeit gesprochen werden kann. Es können Rückschlüsse auf den Ablauf der Reaktionen in der Vorbehandlungszone, in dem Reaktionsreaktor oder in dem Prozessreaktor gezogen werden. Die Basisflüssigkeit kann bei Bedarf verdünnt werden.

Wenn dem Reaktionsreaktor außerdem bedarfsabhängig ein Katalysator und/ oder ein pH-Einstellmittel zugegeben wird, können die Reaktionsbedingungen während des Verfahrens an die jeweils herrschenden Anforderungen angepasst werden.

Vorzugsweise wird als Katalysator Kupfer in Form einer Kupfersulfat-Lösung und/oder als pH-Einstellmittel Natronlauge verwendet.

Wenn dem Prozessreaktor bedarfsabhängig ein pH-Einstellmittel, insbesondere Natronlauge, und/oder ein Oxidationsmittel, insbesondere Wasserstoffperoxid, zugegeben wird, können auch dort die Reaktionsbedingungen während des Verfahrens an die jeweils herrschenden Anforderungen angepasst werden.

Vorzugsweise wird der pH-Wert im kontinuierlichen Flüssigkeitsstrom weitgehend konstant, insbesondere in einem Bereich zwischen 9 und 10, und/oder die Temperatur des Flüssigkeitsstromes weitgehend konstant, insbesondere in einem Bereich zwischen 40°C und 60°C, gehalten.

Die oben angegeben Aufgabe wird bei einer Anlage der eingangs genannten Art dadurch gelöst, dass
e) Basisflüssigkeit und/oder Intermediatflüssigkeit und/oder Prozessflüssigkeit mittels einer Analyse-Kreiseinrichtung in die Vorbehandlungszone zurückführbar ist, wobei mittels der Analyse-Kreiseinrichtung die Cyanid-Konzentration mit Hilfe einer Cyanid-Analyseeinrichtung in der jeweiligen Flüssigkeit ermittelbar ist;
   und
f) Prozessflüssigkeit über ein Rückführsystem in die Vorbehandlungszone zurückführbar ist;
   und/oder
g) ein Speicherbehälter vorhanden ist, in welchen Prozessflüssigkeit bei der Entnahme aus dem Prozessreaktor über eine Speicherleitung zumindest teilweise überführbar ist, und Flüssigkeit aus dem Speicherbehälter in die Vorbehandlungszone zurückführbar ist.

Vorteilhaft weist die Anlage außerdem einige oder alle in den abhängigen Ansprüchen 7 bis 9 angegebenen Merkmale auf. Die Vorteile entsprechen dabei den oben zum Verfahren zu den jeweils entsprechenden Merkmalen erläuterten Vorteilen.

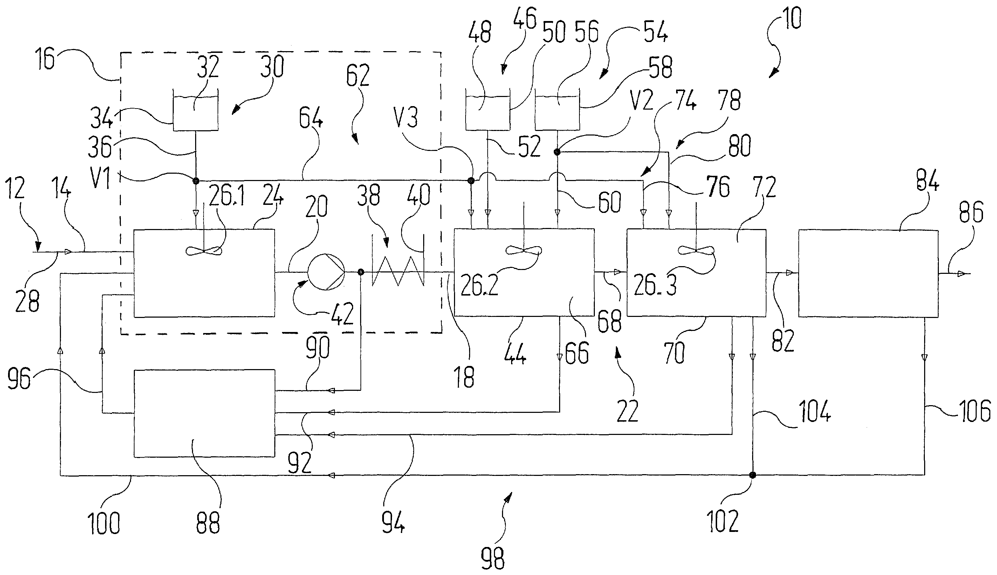

Nachfolgend wird nun ein Ausführungsbeispiel der Erfindung anhand der einzigen Figur näher erläutert. Die Figur zeigt schematisch eine Anlage 10 zum Behandeln von cyanidhaltiger Flüssigkeit 12, bei der es sich insbesondere um cyanidhaltiges Abwasser 14 aus industriellen Prozessen handeln kann, wie sie eingangs erläutert wurden.

Die Anlage 10 umfasst eine Vorbehandlungszone 16, in welcher cyanidhaltige Flüssigkeit 12 einer Vorbehandlung unterzogen wird, bei welcher zumindest ein vorgegebener pH-Wert und eine vorgegebene Temperatur eingestellt werden. Bei der Vorbehandlung wird eine Basisflüssigkeit 18 gebildet, welche im Anschluss an die Vorbehandlung aus der Vorbehandlungszone 16 über eine Überführungsleitung 20 in eine Reaktionszone 22 gelangt.

Die Vorbehandlungszone 16 umfasst einen Vorbehandlungsreaktor 24, in welchem die dort vorhandene Flüssigkeit mit einem nur stilisiert angedeutetem Rührer 26.1 gerührt wird, so dass vorhandene Flüssigkeitskomponenten innig vermischt werden.

Dem Vorbehandlungsreaktor 24 wird die zu behandelnde cyanidhaltige Flüssigkeit 12 durch eine Zuführleitung 28 zugeführt. Dem Vorbehandlungsreaktor 24 wird außerdem mittels einer pH-Dosiereinrichtung 30 ein pH-Einstellmittel 32 zudosiert, welche einen pH-Vorlagebehälter 34 für das pH-Einstellmittel 32 und eine damit verbundene pH-Abgabeleitung 36 aufweist, die ihrerseits in den Vorbehandlungsreaktor 24 mündet und ein Dosierventil V1 umfasst.

Abgesehen von dem Dosierventil V1 und weiter unten angegebenen Ventilen sind bei der Anlage 10 an allen Stellen, an denen eine Flüssigkeitsströmung unterbrochen, freigegeben, gedrosselt oder erhöht werden muss, entsprechende Ventile verbaut, wie es an und für sich bekannt ist.

Beim vorliegenden Ausführungsbeispiel handelt es sich bei dem pH-Einstellmittel 32 um Natronlauge NaOH. Der pH-Wert der Flüssigkeit in dem Vorbehandlungsreaktor 24 wird mittels nicht eigens gezeigter, an und für sich bekannter Sensoren überwacht; die pH-Dosiereinrichtung 30 erhöht, verringert oder unterbricht abhängig von dem dort ermittelten pH-Wert im Vergleich zu einem Soll-pH-Wert die Zufuhr von pH-Einstellmittel 32.

Damit die in der in der Vorbehandlungszone 16 durch die Vorbehandlung erzeugte Basisflüssigkeit mit definierter Temperatur in die Reaktionszone 22 gelangt, ist eine Temperiereinrichtung 38 vorhanden. Beim vorliegenden Ausführungsbeispiel ist die Temperiereinrichtung 38 als Wärmetauscher 40 ausgebildet, der von der Überführungsleitung 20 passiert wird. Bei einer nicht eigens gezeigten Abwandlung kann auch ein Heizaggregat oder dergleichen am Vorbehandlungsreaktor 24 vorgesehen sein, so dass die Basisflüssigkeit im Vorbehandlungsreaktor 24 entsteht. Die Basisflüssigkeit 18 soll eine Temperatur zwischen 40°C und 60°C, insbesondere eine Temperatur von 50°C, haben.

Die Flüssigkeiten in der Anlage 10 werden in an und für sich bekannter Weise mittels eines Pumpensystems 42 gefördert, von dem exemplarisch lediglich eine in der Überführungsleitung 20 angeordnete Förderpumpe gezeigt ist, die kein gesondertes Bezugszeichen trägt.

Die Überführungsleitung 20 mündet nun in der Reaktionszone 22 in einen Reaktionsreaktor 44, der mit einem Rührer 26.2 ausgestattet ist. Dem Reaktionsreaktor 44 wird mittels einer Katalysator-Dosiereinrichtung 46 ein Katalysator 48 zudosiert, welche einen Katalysator-Vorlagebehälter 50 für den Katalysator 48 und eine damit verbundene Katalysator-Abgabeleitung 52 aufweist, die ihrerseits in den Reaktionsreaktor 44 mündet. Beim vorliegenden Ausführungsbeispiel handelt es sich bei dem Katalysator 48 um Kupfersulfat CuSO₄ und es wird eine CuSO₄-Lösung verwendet. Beim vorliegenden Ausführungsbeispiel wird eine 10 bis 20 %ige CuSO₄-Lösung verwendet.

Dem Reaktionsreaktor 44 wird außerdem mittels einer Oxidationsmittel-Dosiereinrichtung 54 ein Oxidationsmittel 56 zudosiert, welche einen Oxidationsmittel - Vorlagebehälter 58 für das Oxidationsmittel 56 und eine damit verbundene Oxidationsmittel-Abgabeleitung 60 aufweist, die ihrerseits in den Reaktionsreaktor 44 mündet und in der ein Dosierventil V2 angeordnet ist. Beim vorliegenden Ausführungsbeispiel handelt es sich bei dem Oxidationsmittel 56 um Wasserstoffperoxid H₂O₂ und es wird eine 25 bis 50 %ige H₂O₂-Lösung verwendet.

Darüber hinaus kann dem Reaktionsreaktor 44 über eine zweite pH-Dosiereinrichtung 62 pH-Einstellmittel 32 zudosiert werden. Beim vorliegenden Ausführungsbeispiel geht hierzu eine pH-Zweigleitung 64 vom Dosierventil V1 in der pH-Abgabeleitung 36 der pH-Dosiereinrichtung 30 ab. Dabei kann die Abgabemenge an pH-Einstellmittel 32 unabhängig von der Menge eingestellt werden, welche dem Vorbehandlungsreaktor 24 zudosiert wird. Das Dosierventil V1 ist als Mehrwegeventil ausgebildet, durch welches der Volumenstrom durch die pH-Abgabeleitung 36 und die pH-Zweigleitung 64 eingestellt werden kann. Außerdem ist in der pH-Zweigleitung 64 ein Dosierventil V3 angeordnet.

Durch die Zugabe von Katalysator 48 und Oxidationsmittel 56 wird in dem Reaktionsreaktor 44 eine Oxidationsreaktion der Cyanide initiiert und eine Intermediatflüssigkeit 66 gebildet.

Bei der Verwendung von H₂O₂ als Oxidationsmittel in der Anwesenheit von Kupfer als Katalysator werden Cyanidionen dabei gemäß CN⁻ + H₂O₂ -(Cu)-> OCN⁻ + H₂O zu Cyanat oxidiert. Diese Reaktion kann in einem verhältnismäßig großen pH-Bereich zwischen 3 und 12 ablaufen. Zwar ist es bekannt, die Reaktion bei einem pH-Wert von 4 bis 5 durchzuführen, vorzugsweise wird jedoch vorliegend bei der Vorbehandlung ein pH-Wert zwischen 9 und 10 eingestellt, der dann im Reaktionsreaktor 44 aufrechterhalten wird. Bei solchen pH-Werden kann weitgehend die Freisetzung von Cyanwasserstoff HCN unterbunden und die Stabilität von H₂O₂ sichergestellt werden.

Cyanat wird anschließend hydrolysiert und im Alkalischen weiter zu Carbonat CO₃⁻und Ammoniak NH₃ oxidiert. Im Sauren könnte Cyanat zu Kohlendioxid CO₂ und Ammonium NH₄⁺ oxidiert werden.

Der Reaktionsreaktor 44 ist durch eine Verbindungsleitung 68 mit einem Prozessreaktor 70 der Reaktionszone 22 verbunden, durch welche die Intermediatsflüssigkeit 66 in den Prozessreaktor 70 überführt wird. Der Prozessreaktor 70 ist mit einem Rührer 26.3 ausgestattet. In dem Prozessreaktor 70 herrschen Bedingungen, bei denen die im Reaktionsreaktor 44 initiierte Oxidationsreaktion der Cyanide ablaufen kann, wobei sich eine Prozessflüssigkeit 72 bildet.

Dem Prozessreaktor 70 kann über eine dritte pH-Dosiereinrichtung 74 pH-Einstellmittel 32 zudosiert werden. Beim vorliegenden Ausführungsbeispiel geht hierzu eine weitere pH-Zweigleitung 76 vom Dosierventil V3 in der pH-Zweigleitung 64 der zweiten pH-Dosiereinrichtung 62 ab. Dabei kann die Abgabemenge an pH-Einstellmittel 32 unabhängig von der Menge eingestellt werden, welche dem Vorbehandlungsreaktor 24 zudosiert wird. Das Dosierventil V3 ist entsprechend als Mehrwegeventil ausgebildet, durch welches der jeweilige Volumenstrom durch die pH-Zweigleitungen 64 und 76 eingestellt werden kann.

Ferner kann dem Prozessreaktor 68 über eine zweite Oxidationsmittel-Dosiereinrichtung 78 Oxidationsmittel 56 zugeführt werden. Beim vorliegenden Ausführungsbeispiel geht hierzu eine Oxidationsmittel-Zweigleitung 80 vom Dosierventil V2 in der Oxidationsmittel-Abgabeleitung 60 der ersten Oxidationsmittel-Dosiereinrichtung 54 ab. Dabei kann die Abgabemenge an Oxidationsmittel 56 unabhängig von der Menge eingestellt werden, welche dem Reaktionsreaktor 44 zudosiert wird. Das Dosierventil V2 ist entsprechend als Mehrwegeventil ausgebildet, durch welches der jeweilige Volumenstrom durch die Oxidationsmittel-Abgabeleitung 60 und die Oxidationsmitte-Zweigleitung 80 eingestellt werden kann.

Der Prozessreaktor 70 ist über eine Speicherleitung 82 mit einem Speicherbehälter 84 verbunden, so dass Prozessflüssigkeit 72 in den Speicherbehälter 84 überführt werden kann. Der Speicherbehälter 84 hat eine Ausgangsleitung 86, mittels welcher Flüssigkeit aus dem Speicherbehälter 84 abgeführt werden kann.

Der Cyanidgehalt der in der Anlage vorhandenen Flüssigkeiten kann mit Hilfe einer Cyanid-Analyseeinrichtung 88 in verschiedenen Stadien während der laufenden Behandlung ermittelt werden, so dass der Behandlungsablauf, die Temperatur bei der Vorbehandlung und die Dosierung von Katalysator 48 und Oxidationsmittel 56 abhängig von den Analyseergebnissen angepasst werden kann.

Hierzu sind die Überführungsleitung 20, der Reaktionsreaktor 44 und der Prozessreaktor 70 über eine jeweilige Analyse-Kreisleitung 90, 92 bzw. 94 mit der Cyanid-Analyseeinrichtung 88 verbunden, in welcher die Flüssigkeiten aus den Analyse-Kreisleitungen 90, 92, 94 jeweils separat auf ihre Cyanid-Konzentration analysiert werden können.

Die Cyanid-Analyseeinrichtung 88 umfasst eine Kreis-Sammelleitung 96, über welche die Teilströme in den Vorbehandlungsreaktor 24 zurückgeführt werden. Insgesamt bilden die Analyse-Kreisleitungen 90, 92, 94 mit der Cyanid-Analyseeinrichtung 88 und der Kreis-Sammelleitung 96 somit eine Analyse-Kreiseinrichtung 88, 90, 92, 94, 96, mittels welcher Basisflüssigkeit 18 und/oder Intermediatflüssigkeit 66 und/oder Prozessflüssigkeit in die Vorbehandlungszone 16 zurückgeführt wird, wobei mittels der Analyse-Kreiseinrichtung 88 die Cyanid-Konzentration in der jeweiligen Flüssigkeit 66, 72, 88 ermittelt wird.

Darüber hinaus ist der Vorbehandlungsreaktor 24 noch über ein Rückführsystem 98 mit dem Prozessreaktor 70 und dem Speicherbehälter 84 verbunden. Hierzu führt eine Rückführ-Sammelleitung 100 von einem Mehrwegeventil 102 zum Vorbehandlungsreaktor 24, wobei eine Rückführleitung 104 von dem Prozessreaktor 70 und eine Rückführleitung 106 von dem Speicherbehälter 84 in das Mehrwegeventil 102 münden.

Jeder Reaktor 24, 44, 70 und der Speicherbehälter 84 ist an ein nicht eigens gezeigtes Abluftsystem angeschlossen, welches durch kontinuierliches Absaugen der Luft einen Unterdruck in den Reaktoren 24, 44, 70 und dem Speicherbehälter 84 aufbaut. Die abgeführte Luft kann in einer ebenfalls nicht eigens gezeigten Abluftverbrennungsanlage thermisch behandelt werden

Die Anlage 10 wird im Durchlaufverfahren betrieben. Hierzu ist das Pumpensystem 42 derart eingerichtet, dass ein kontinuierlicher Flüssigkeitsstrom aufrechterhalten werden kann, bei dem Basisflüssigkeit 18 kontinuierlich aus der Vorbehandlungszone 16 in den Reaktionsreaktor 44 überführt wird, Intermediatflüssigkeit 66 kontinuierlich von dem Reaktionsreaktor 44 in den Prozessreaktor 70 überführt wird und Prozessflüssigkeit 72 kontinuierlich aus dem Prozessreaktor 70 entnommen wird.

Die Überwachung der Reaktionsparameter pH-Wert, Temperatur, Cyanid-Konzentration erfolgt während des Behandlungsablaufs. Aus den ermittelten Reaktionsparametern wird der jeweilige Bedarf an pH-Einstellmittel 32, an Katalysator 48 und an Oxidationsmittel 56 für einen einwandfreien Reaktionsverlauf im Vorbehandlungsreaktor 24, im Reaktionsreaktor 44 und im Prozessreaktor 70 ermittelt. pH-Einstellmittel 32, Katalysator 48 und Oxidationsmittel 56 werden dann jeweils bedarfsabhängig an entsprechender Stelle zudosiert.

Vorzugsweise wird der pH-Wert im kontinuierlichen Flüssigkeitsstrom weitgehend konstant und insbesondere in dem oben erwähnten Bereich zwischen 9 und 10 gehalten. Die Temperatur in dem kontinuierlichen Flüssigkeitsstrom wird ebenfalls vorzugsweise konstant gehalten, insbesondere in dem oben zur Basisflüssigkeit 18 genannten Bereich zwischen 40°C und 60°C und vorzugsweise bei 50°C.

Durch die Rückführung von Prozessflüssigkeit 72 aus dem Prozessreaktor 70 oder von Flüssigkeit aus dem Speicherbehälter 84 kann die Flüssigkeit im Vorbehandlungsreaktor 24 bei Bedarf verdünnt werden, so dass die Cyanid-Konzentration der Basisflüssigkeit 18, welche in die Reaktionszone 22 eintritt, geringer ist als ohne diese Maßnahme.

Wenn die Analyse der Prozessflüssigkeit im Prozessreaktor 70 ergibt, dass die dortige Cyanid-Konzentration den oben erwähnten zulässigen Schwellenwert oder Grenzwert für eine cyanidentgiftete Lösung überschreitet, wird die Speicherleitung 82 verschlossen und die Prozessflüssigkeit so lange in den Vorbehandlungsreaktor 24 zurückgeführt, bis die Cyanid-Konzentration im Prozessreaktor 70 soweit abgesunken ist, dass die Prozessflüssigkeit mit der zulässigen Rest-Cyanid-Konzentration in entnommen und dem Speicherbehälter 84 zugeführt werden kann.

Die oben erläuterte Anlage 10 ist zweistufig mit dem Reaktionsreaktor 44 und dem Prozessreaktor 70 ausgebildet. Bei nicht eigens gezeigten Abwandlungen können dem Prozessreaktor 70 noch weitere Reaktoren folgen, so dass die Cyanidentgiftung in einem Durchlaufverfahren in einer drei-, vier- oder auch höherstufigen Reaktorkaskade erfolgt.

## Patentansprüche

1. Verfahren zum Behandeln von cyanidhaltigen Flüssigkeiten (12), insbesondere von cyanidhaltigem Abwasser (14), bei welchem
a) cyanidhaltige Flüssigkeit (12) in einer Vorbehandlungszone (16) einer Vorbehandlung unterzogen wird, bei welcher zumindest ein vorgegebener pH-Wert zwischen 3 und 12 und eine vorgegebene Temperatur eingestellt werden, wobei bei der Vorbehandlung eine Basisflüssigkeit (18) gebildet wird;
b) Basisflüssigkeit (18) mit einer Temperatur zwischen 40°C und 60°C in wenigstens einen Reaktionsreaktor (44) gelangt und in diesem Reaktionsreaktor (44) zumindest mit einem Oxidationsmittel (56) in Form von Wasserstoffperoxid versetzt wird, wodurch eine Oxidationsreaktion der Cyanide initiiert wird;
c) Flüssigkeit aus dem Reaktionsreaktor (44) als Intermediatflüssigkeit (66) in wenigstens einen Prozessreaktor (70) überführt wird, in welchem Bedingungen herrschen, bei denen die im Reaktionsreaktor (44) initiierte Oxidationsreaktion der Cyanide ablaufen kann, wobei sich eine Prozessflüssigkeit (72) bildet;
d) zumindest zeitweise ein kontinuierlicher Flüssigkeitsstrom aufrechterhalten wird, bei dem
da) Basisflüssigkeit (18) kontinuierlich aus der Vorbehandlungszone (16) in den Reaktionsreaktor (44) überführt wird;
db) Intermediatflüssigkeit (66) kontinuierlich von dem Reaktionsreaktor (44) in den Prozessreaktor (70) überführt wird; und
dc) Prozessflüssigkeit (72) kontinuierlich aus dem Prozessreaktor (70) entnommen wird;
**dadurch gekennzeichnet, dass**
e) Basisflüssigkeit (18) und/oder Intermediatflüssigkeit (66) und/oder Prozessflüssigkeit (72) mittels einer Analyse-Kreiseinrichtung (88, 90, 92, 94, 96) in die Vorbehandlungszone (16) zurückgeführt wird, wobei mittels der Analyse-Kreiseinrichtung (88) die Cyanid-Konzentration in der jeweiligen Flüssigkeit (66, 72, 88) ermittelt wird;
und
f) Prozessflüssigkeit (72) in die Vorbehandlungszone (16) zurückgeführt wird;
und/oder
g) Prozessflüssigkeit (72) bei der Entnahme zumindest teilweise in einen Speicherbehälter (84) überführt wird und Flüssigkeit aus dem Speicherbehälter (84) in die Vorbehandlungszone (16) zurückgeführt wird.

2. Verfahren nach Anspruch 1, **dadurch gekennzeichnet, dass** dem Reaktionsreaktor (44) außerdem ein Katalysator (48) und/
oder ein pH-Einstellmittel (32) zugegeben wird.

3. Verfahren nach Anspruch 2, **dadurch gekennzeichnet, dass** als Katalysator (48) Kupfer in Form einer Kupfersulfat-Lösung und/oder als pH-Einstellmittel Natronlauge verwendet wird.

4. Verfahren nach einem der Ansprüche 1 bis 3, **dadurch gekennzeichnet, dass** dem Prozessreaktor (70) ein pH-Einstellmittel (32), insbesondere Natronlauge, und/oder ein Oxidationsmittel (56) in Form von Wasserstoffperoxid, zugegeben wird.

5. Verfahren nach einem der Ansprüche 1 bis 4, **dadurch gekennzeichnet, dass** der pH-Wert im kontinuierlichen Flüssigkeitsstrom weitgehend konstant, insbesondere in einem Bereich zwischen 9 und 10, und/oder die Temperatur des Flüssigkeitsstromes weitgehend konstant, insbesondere in einem Bereich zwischen 40°C und 60°C, gehalten wird.

6. Anlage zum Behandeln von cyanidhaltigen Flüssigkeiten (12), insbesondere von cyanidhaltigem Abwasser (14), mit
a) einer Vorbehandlungszone (16), in welcher cyanidhaltige Flüssigkeit (12) einer Vorbehandlung unterziehbar ist, die einen Vorbehandlungsreaktor (24) umfasst, bei welcher zumindest
eine pH-Dosiereinrichtung (30) vorhanden ist, mittels welcher ein pH-Einstellmittel (32) zudosierbar ist, sodass ein vorgegebener pH-Wert zwischen 3 und 12 eingestellt werden kann, und eine vorgegebene Temperatur eingestellt werden kann,
wobei bei der Vorbehandlung eine Basisflüssigkeit (18) gebildet wird;
b) wenigstens einem Reaktionsreaktor (44), in welchen Basisflüssigkeit (18) mit einer Temperatur zwischen 40°C und 60°C gelangt und in welchem die Basisflüssigkeit (18) zumindest mittels einer vorhandenen Oxidationsmittel-Dosiereinrichtung (54) mit einem Oxidationsmittel (56) in Form von Wasserstoffperoxid versetzbar ist, wodurch eine Oxidationsreaktion der Cyanide initiiert wird;
wobei
c) Flüssigkeit aus dem Reaktionsreaktor (44) als Intermediatflüssigkeit (66) über eine Verbindungsleitung (68) in wenigstens einen Prozessreaktor (70) überführbar ist, in welchem Bedingungen herrschen, bei denen die im Reaktionsreaktor (44) initiierte Oxidationsreaktion der Cyanide ablaufen kann, wobei sich eine Prozessflüssigkeit (72) bildet;
d) mittels eines Pumpensystems (42) zumindest zeitweise ein kontinuierlicher Flüssigkeitsstrom aufrechterhaltbar ist, bei dem
da) Basisflüssigkeit (18) kontinuierlich aus dem Vorbehandlungsreaktor (24) der Vorbehandlungszone (16) über eine Überführungsleitung (20) in den Reaktionsreaktor (44) überführt wird;
db) Intermediatflüssigkeit (66) kontinuierlich von dem Reaktionsreaktor (44) über die Verbindungsleitung (68) in den Prozessreaktor (70) überführt wird; und
dc) Prozessflüssigkeit (72) kontinuierlich aus dem Prozessreaktor (70) entnommen wird;
**dadurch gekennzeichnet, dass**
e) Basisflüssigkeit (18) und/oder Intermediatflüssigkeit (66) und/oder Prozessflüssigkeit (72) mittels einer Analyse-Kreiseinrichtung (88, 90, 92, 94, 96) in die Vorbehandlungszone (16) zurückführbar ist, wobei mittels der Analyse-Kreiseinrichtung (88) die Cyanid-Konzentration mit Hilfe einer Cyanid-Analyseeinrichtung (88) in der jeweiligen Flüssigkeit (66, 72, 88) ermittelbar ist;
und
f) Prozessflüssigkeit (72) über ein Rückführsystem (98) in die Vorbehandlungszone (16) zurückführbar ist;
und/oder
g) ein Speicherbehälter (84) vorhanden ist, in welchen Prozessflüssigkeit (72) bei der Entnahme aus dem Prozessreaktor (70) über eine Speicherleitung (82) zumindest teilweise überführbar ist, und Flüssigkeit aus dem Speicherbehälter (84) in die Vorbehandlungszone (16) zurückführbar ist.

7. Anlage nach Anspruch 6, **dadurch gekennzeichnet, dass** dem Reaktionsreaktor (44) außerdem mittels einer Katalysator-Dosiereinrichtung (46) ein Katalysator (48) und/oder mittels einer pH-Dosiereinrichtung (62) ein pH-Einstellmittel (32) zugebbar ist.

8. Anlage nach Anspruch 7, **dadurch gekennzeichnet, dass** der Katalysator (48) Kupfer in Form einer Kupfersulfat-Lösung und/oder das pH-Einstellmittel Natronlauge ist.

9. Anlage nach einem der Ansprüche 6 bis 8, **dadurch gekennzeichnet, dass** dem Prozessreaktor (70) mittels einer pH-Dosiereinrichtung (74) ein pH-Einstellmittel (32) und/oder mittels einer Oxidationsmittel-Dosiereinrichtung (78) ein Oxidationsmittel (56) in Form von Wasserstoffperoxid zugebbar ist.

## Claims

1. A method for treating cyanide-containing liquids (12), more particularly cyanide-containing wastewater (14), wherein
a) cyanide-containing liquid (12) is subjected in a pretreatment zone (16) to a pretreatment wherein at least a specified pH between 3 and 12 and a specified temperature are established, the pretreatment forming a base liquid (18);
b) base liquid (18) having a temperature between 40°C and 60°C enters at least one reaction reactor (44) and is admixed in that reaction reactor (44) at least with an oxidizing agent (56) in the form of hydrogen peroxide, thereby initiating an oxidation reaction of the cyanides,
c) liquid from the reaction reactor (44) is transferred as intermediate liquid (66) into at least one process reactor (70), in which conditions prevail under which the cyanide oxidation reaction initiated in the reaction reactor (44) is able to proceed, forming a process liquid (72);
d) at least periodically a continuous liquid stream is maintained, wherein
da) base liquid (18) is transferred continuously from the pretreatment zone (16) into the reaction reactor (44);
db) intermediate liquid (66) is transferred continuously from the reaction reactor (44) into the process reactor (70); and
dc) process liquid (72) is withdrawn continuously from the process reactor (70);
**characterized in that**
e) base liquid (18) and/or intermediate liquid (66) and/or process liquid (72) is returned into the pretreatment zone (16) by means of an analytical circuit facility (88, 90, 92, 94, 96), the analytical circuit facility (88) ascertaining the cyanide concentration in the respective liquid (66, 72, 88);
and
f) process liquid (72) is returned into the pretreatment zone (16);
and/or
g) process liquid (72) on withdrawal is transferred at least partly into a storage vessel (84), and liquid from the storage vessel (84) is returned into the pretreatment zone (16).

2. The method as claimed in claim 1, **characterized in that** additionally a catalyst (48) and/or a pH modifier (32) is added to the reaction reactor (44).

3. The method as claimed in claim 2, **characterized in that** said catalyst (48) used is copper in the form of a copper sulfate solution and/or said pH modifier used is aqueous sodium hydroxide solution.

4. The method as claimed in any of claims 1 to 3, **characterized in that** a pH modifier (32), more particularly aqueous sodium hydroxide solution, and/or an oxidizing agent (56) in the form of hydrogen peroxide, is added to the process reactor (70).

5. The method as claimed in any of claims 1 to 4, **characterized in that** the pH in the continuous liquid stream is held largely constant, more particularly in a range between 9 and 10, and/or the temperature of the liquid stream is held largely constant, more particularly in a range between 40°C and 60°C.

6. A plant for treating cyanide-containing liquids (12), more particularly cyanide-containing wastewater (14), having
a) a pretreatment zone (16), in which cyanide-containing liquid (12) can be subjected to a pretreatment which comprises a pretreatment reactor (24), wherein a pH metering facility (30) is provided by means of which a pH metering modifier (32) can be added insuch a way that a specified pH between 3 and 12 can be established, and a specified temperature can be established, the pretreatment forming a base liquid (18);
b) at least one reaction reactor (44) into which base liquid (18) having a temperature between 40°C and 60°C enters, in which reaction reactor (44) the base liquid (18) can be admixed with an oxidizing agent (56) in the form of hydrogen peroxide, thereby initiating an oxidation reaction of the cyanides
wherein
c) liquid from the reaction reactor (44) can be transferred as intermediate liquid (66) via a connecting line (68) into at least one process reactor (70), in which conditions prevail under which the cyanide oxidation reaction initiated in the reaction reactor (44) is able to proceed, forming a process liquid (72);
d) by means of a pump system (42), at least periodically, a continuous liquid stream can be maintained, wherein
da) base liquid (18) is transferred continuously from the pretreatment reactor (24) of the pretreatment zone (16) into the reaction reactor (44);
db) intermediate liquid (66) is transferred continuously from the reaction reactor (44) via the connection line (68) into the process reactor (70); and
dc) process liquid (72) is withdrawn continuously from the process reactor (70);
**characterized in that**
e) base liquid (18) and/or intermediate liquid (66) and/or process liquid (72) can be returned into the pretreatment zone (16) by means of an analytical circuit facility (88, 90, 92, 94, 96), the analytical circuit facility (88) being able to ascertain the cyanide concentration in the respective liquid (66, 72, 88) with the aid of a cyanide analysis facility (88);
and
f) process liquid (72) can be returned via a recycle system (98) into the pretreatment zone (16);
and/or
g) there is a storage vessel (84) into which process liquid (72) on withdrawal is at least partly transferrable, and liquid from the storage vessel (84) can be returned into the pretreatment zone (16).

7. The plant as claimed in claim 6, **characterized in that** additionally a catalyst (48), by means of a catalyst metering facility (46), and/or a pH modifier (32), by means of a pH metering facility (62), can be added to the reaction reactor (44).

8. The plant as claimed in claim 7, **characterized in that** the catalyst (48) is copper in the form of a copper sulfate solution and/or the pH modifier is aqueous sodium hydroxide solution.

9. The plant as claimed in any of claims 6 to 8, **characterized in that** a pH modifier (32), by means of a pH metering facility (74), and/or an oxidizing agent (56) in the form of hydrogen peroxide, by means of an oxidizing agent metering facility (78), can be added to the process reactor (70).

## Revendications

1. Procédé de traitement de liquides contenant du cyanure (12), notamment d'eaux usées contenant du cyanure (14), lors duquel
a) du liquide contenant du cyanure (12) est soumis à un prétraitement dans une zone de prétraitement (16) lors duquel au moins une valeur de pH prédéfinie entre 3 et 12 et une température prédéfinie sont réglées, dans lequel un liquide de base (18) est formé lors du prétraitement ;
b) du liquide de base (18) avec une température comprise entre 40 °C et 60 °C parvient dans au moins un réacteur de réaction (44) et est mélangé à au moins un oxydant (56) sous forme de peroxyde d'hydrogène dans ce réacteur de réaction (44), moyennant quoi une réaction d'oxydation des cyanures est initiée ;
c) du liquide est transféré du réacteur de réaction (44) en tant que liquide intermédiaire (66) dans au moins un réacteur de processus (70) dans lequel des conditions règnent lors desquelles la réaction d'oxydation initiée dans la réacteur de réaction (44) des cyanures peut se dérouler, dans lequel un liquide de processus (72) se forme ;
d) un courant de liquide continu est maintenu au moins temporairement, dans le cas duquel
da) du liquide de base (18) est transféré en continu de la zone de prétraitement (16) dans le réacteur de réaction (44) ;
db) du liquide intermédiaire (66) est transféré en continu du réacteur de réaction (44) dans le réacteur de processus (70) ; et
dc) du liquide de processus (72) est prélevé en continu du réacteur de processus (70) ;
**caractérisé en ce que**
e) du liquide de base (18) et/ou liquide intermédiaire (66) et/ou liquide de processus (72) est renvoyé dans la zone de prétraitement (16) au moyen d'un dispositif de circuit d'analyse (88, 90, 92, 94, 96), dans lequel la concentration en cyanure dans le liquide respectif (66, 72, 88) est déterminée au moyen du dispositif de circuit d'analyse (88) ;
et
f) du liquide de processus (72) est renvoyé dans la zone de prétraitement (16) ; et/ou
g) du liquide de processus (72) est transféré au moins partiellement dans un récipient de stockage (84) lors du prélèvement et du liquide est renvoyé du récipient de stockage (84) dans la zone de prétraitement (16).

2. Procédé selon la revendication 1, **caractérisé en ce qu'**un catalyseur (48) et/ou un agent de réglage de pH (32) est en outre ajouté au réacteur de réaction (44).

3. Procédé selon la revendication 2, **caractérisé en ce que** du cuivre sous forme d'une solution de sulfate de cuivre est utilisé en tant que catalyseur (48) et/ou de la soude caustique est utilisée en tant qu'agent de réglage de pH.

4. Procédé selon une des revendications 1 à 3, **caractérisé en ce qu'**un agent de réglage de pH (32), notamment de la soude caustique, et/ou un oxydant (56) sous forme de peroxyde d'hydrogène est ajouté au réacteur de processus (70).

5. Procédé selon une des revendications 1 à 4, **caractérisé en ce que** la valeur de pH est maintenue de manière largement constante dans le courant de liquide continu, notamment dans une plage comprise entre 9 et 10, et/ou la température du courant de liquide est maintenue de manière largement constante, notamment dans une plage comprise entre 40 °C et 60 °C.

6. Installation de traitement de liquides contenant du cyanure (12), notamment d'eaux usées contenant du cyanure (14), avec
a) une zone de prétraitement (16) dans laquelle du liquide contenant du cyanure (12) peut être soumis à un prétraitement, laquelle comprend un réacteur de prétraitement (24), dans le cas de laquelle au moins
un dispositif de dosage de pH (30) est présent, au moyen duquel un agent de réglage de pH (32) peut être ajouté de sorte qu'une valeur de pH prédéfinie entre 3 et 12 peut être réglée et une température prédéfinie peut être réglée,
dans laquelle un liquide de base (18) est formé lors du prétraitement ;
b) au moins un réacteur de réaction (44) dans lequel du liquide de base (18) avec une température comprise entre 40 °C et 60 °C parvient et dans lequel le liquide de base (18) peut être mélangé à un oxydant (56) sous forme de peroxyde d'hydrogène au moins au moyen d'un dispositif de dosage d'oxydant présent (54), moyennant quoi une réaction d'oxydation des cyanures est initiée ;
dans laquelle
c) du liquide peut être transféré du réacteur de réaction (44) en tant que liquide intermédiaire (66) par le biais d'une conduite de connexion (68) dans au moins un réacteur de processus (70) dans lequel des conditions règnent lors desquelles la réaction d'oxydation initiée dans la réacteur de réaction (44) des cyanures peut se dérouler, dans laquelle un liquide de processus (72) se forme ;
d) un courant de liquide continu peut être maintenu au moins temporairement au moyen d'un système de pompe (42), dans le cas duquel
da) du liquide de base (18) est transféré en continu du réacteur de prétraitement (24) de la zone de prétraitement (16) par le biais d'une conduite de transfert (20) dans le réacteur de réaction (44) ;
db) du liquide intermédiaire (66) est transféré en continu du réacteur de réaction (44) par le biais de la conduite de connexion (68) dans le réacteur de processus (70) ; et
dc) du liquide de processus (72) est prélevé en continu du réacteur de processus (70) ;
**caractérisée en ce que**
e) du liquide de base (18) et/ou liquide intermédiaire (66) et/ou liquide de processus (72) est renvoyé dans la zone de prétraitement (16) au moyen d'un dispositif de circuit d'analyse (88, 90, 92, 94, 96), dans laquelle la concentration en cyanure peut être déterminée dans le liquide respectif (66, 72, 88) au moyen du dispositif de circuit d'analyse (88) à l'aide d'un dispositif d'analyse de cyanure (88) ;
et
f) du liquide de processus (72) peut être renvoyé dans la zone de prétraitement (16) par le biais d'un système de renvoi (98) ;
et/ou
g) un récipient de stockage (84) est présent, dans lequel du liquide de processus (72) peut être transféré au moins partiellement lors du prélèvement du réacteur de processus (70) par le biais d'une conduite de stockage (82) et du liquide peut être renvoyé du récipient de stockage (84) dans la zone de prétraitement (16).

7. Installation selon la revendication 6, **caractérisée en ce qu'**un catalyseur (48) peut en outre être ajouté au réacteur de réaction (44) au moyen d'un dispositif de dosage de catalyseur (46) et/ou un agent de réglage de pH (32) peut être ajouté au moyen d'un dispositif de dosage de pH (62).

8. Installation selon la revendication 7, **caractérisée en ce que** le catalyseur (48) est du cuivre sous forme d'une solution de sulfate de cuivre et/ou l'agent de réglage de pH est de la soude caustique.

9. Installation selon une des revendications 6 à 8, **caractérisée en ce qu'**un agent de réglage de pH (32) peut être ajouté au réacteur de processus (70) au moyen d'un dispositif de dosage de pH (74) et/ou un oxydant (56) sous forme de peroxyde d'hydrogène peut être ajouté au moyen d'un dispositif de dosage d'oxydant (78).
